# EUROPEAN PATENT APPLICATION

(11) **EP 2 423 564 A1**
(43) Date of publication of application: **29.02.2012**
(21) Application number: 10789273.9
(22) Date of filing: 17.02.2010
(51) Int. Cl.: F21S 2/00, F21V 5/00, G02F 1/13357, H04N 5/66, F21Y 101/02

(54) **ILLUMINATION DEVICE, DISPLAY DEVICE, AND TELEVISION RECEIVER**

(30) Priority: 15.06.2009 JP 2009141743
(71) Applicant: Sharp Kabushiki Kaisha, Osaka-shi, Osaka 545-8522 (JP)
(72) Inventor: YOKOTA, Masashi, Osaka-shi, Osaka 545-8522 (JP); YAMAMOTO, Kaori, Osaka-shi, Osaka 545-8522 (JP)
(74) Representative: Müller-Boré & Partner Patentanwälte
(86) International application number: PCT/JP2010/052315
(87) International publication number: WO 2010/146895

(57) **Abstract**

The backlight unit (49) of a display device (69) having a liquid crystal display panel (59) is provided with a chassis (41), a diffusion plate (43) supported by the chassis, and a light source which irradiates the diffusion plate with light. The light source has a plurality of light-emitting modules (MJ) which include an LED (22) serving as a light-emitting element and a diffusion lens (24) that covers the LED. The light-emitting modules are arranged in a grid pattern on the chassis supporting the diffusion plate. Support pins (26) for supporting the diffusion plate are disposed at points on the chassis. The support pins are arranged on line segments connecting adjacent pairs of light-emitting modules.

## Description

### Technical Field

The present invention relates to an illumination device, a display device including the illumination device, and a television receiver including the display device.

### Background Art

A display device using a non-self-luminous display panel such as, for example, a liquid crystal display panel is used typically in combination with an illumination device that illuminates the display panel from behind. An illumination device of this type uses any of various types of light sources including a cold cathode tube, a light emitting element, and the like. Examples of a light emitting element include a light emitting diode (hereinafter, referred to as "LED"), an organic electroluminescent element, an inorganic electroluminescent element, and the like, among which the most commonly used today is an LED. An illumination device described in Patent Document 1 also uses an LED as a light source.

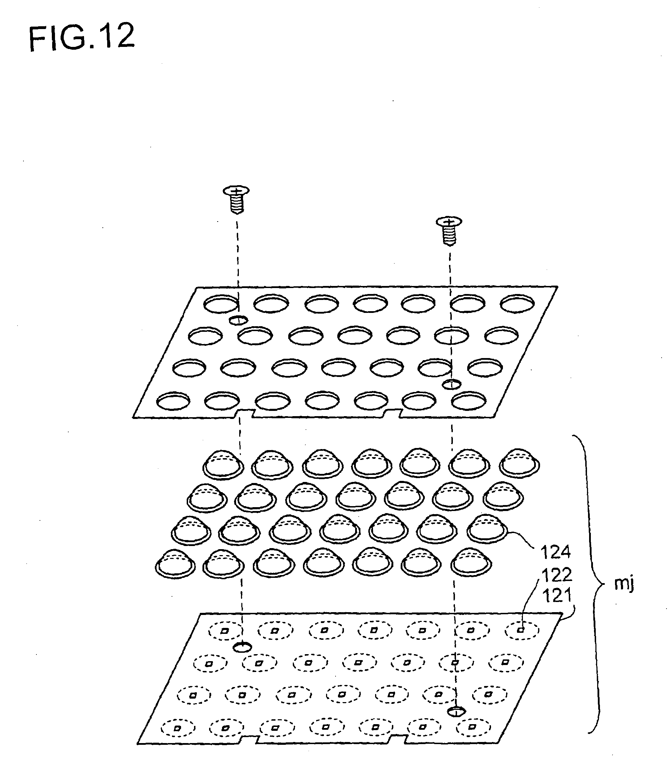

In the illumination device described in Patent Document 1, as shown in Fig. 12, LED 122s are mounted on a mounting substrate 121, and a lens 124 that covers each of the LEDs 122 is mounted to the mounting substrate 121. The mounting substrate 121, the LED 122, and the lens 124 constitute a light emitting module mj. The lens 124 is in the shape of a hemispherical dome having a uniform thickness and transmits therethrough light emitted by each of the LEDs 122 without causing much refraction of the light. Thus, when the LEDs 122 are disposed so as to face upward as shown in Fig. 12, the proportion of light traveling in directions approximate to a vertical direction is large.

An illumination device described in Patent Document 2 also uses an LED as a light source. In the illumination device described in Patent Document 2, a plurality of LEDs are arranged on a substrate to form a planar light source, and a diffusion plate is irradiated with light emitted from this planar light source. On the substrate, protrusions for supporting the diffusion plate are dotted.

### List of Citations

### Patent Literature

Patent Document 1: JP-A-2008-41546
Patent Document 2: JP-A-2006-278077

### Summary of the Invention

### Technical Problem

In each of the illumination devices described in Patent Document 1 and Patent Document 2, respectively, the LEDs are disposed in high density. In this respect, LEDs of recent years have been improved in luminance and thus made it possible to obtain a required total amount of light by using a reduced number of LEDs, which, however, leads to the following problem.

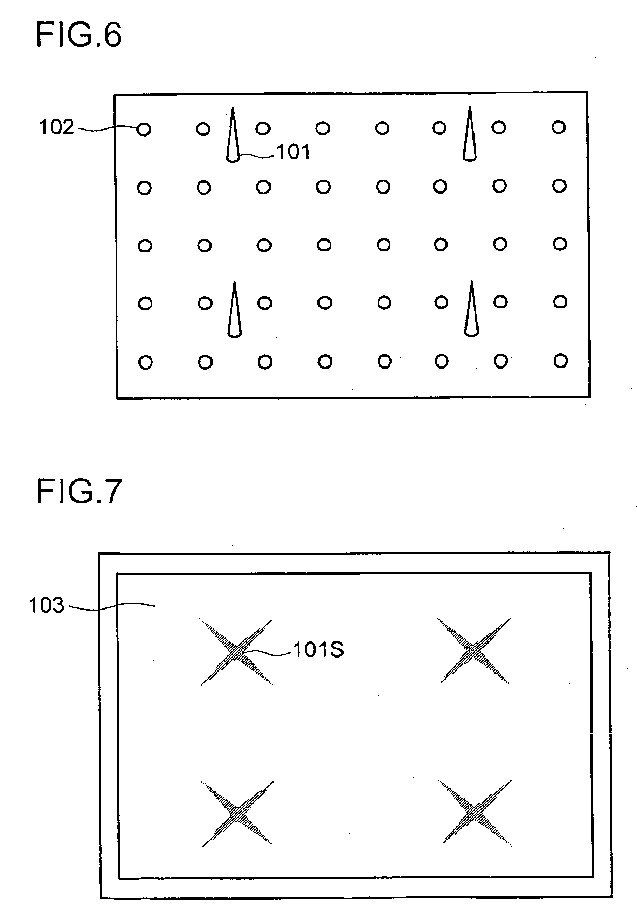

LEDs forming a planar light source are disposed typically in a grid pattern. In a case where a support pin for supporting a diffusion plate is disposed as in the illumination device described in Patent Document 2, the first choice of a position for disposing the support pin would be the center of an area defining a single mesh of the grid pattern. Fig. 6 shows an example in which such a disposition position is adopted. Although Fig. 6 is a plan view, only a support pin 101 is depicted as seen from obliquely above. Each of the support pins 101 is surrounded in four directions by a group of LEDs among LEDs 102 and kept at an equal distance from each of them.

Fig. 7 shows a luminance surface of a diffusion plate 103, which is illuminated by the LEDs 102 shown in Fig. 6. A shadow of the support pin 101 is cast on the luminance surface. In a state where each of the support pins 101 is surrounded in four directions by a group of LEDs among the LEDs 102, as shown in Fig. 7, a cross-shaped shadow 101S is cast.

As shown in Fig. 8, when the LEDs 102 are disposed in a zigzag pattern in which each of the support pins 101 replaces one in a group of LEDs among the LEDs 102, the each of the support pins 101 is surrounded in six directions by the group of LEDs, so that, as shown in Fig. 9, a shadow 101S extending in six directions is cast on the luminance surface of the diffusion plate 103. If, as shown in Fig. 10, the LEDs 102 are disposed at a reduced spacing from each other in a column direction so that higher density is achieved, as shown in Fig. 11, a shadow 101S cross-shaped along diagonal lines of a rectangle is cast. In any case, such a shadow as described above causes unevenness in luminance of a diffusion plate, which is detrimental to displayed image quality in a case where an illumination device is used as a backlight of a display device, and thus should be eliminated as much as possible.

The present invention has been made in view of the foregoing and has as its object to, in an illumination device in which a plurality of light emitting modules each including a light emitting element are disposed in a grid pattern and used as a light source, and a diffusion plate is irradiated with light from this light source, reduce the size of a shadow cast on the diffusion plate by a support pin for supporting the diffusion plate, thereby making unevenness in luminance of the diffusion plate less noticeable.

### Solution to the Problem

According to a preferred embodiment of the present invention, an illumination device including: a chassis, a diffusion plate supported on the chassis, a light source irradiating the diffusion plate with light, the light source being formed by disposing a plurality of light emitting modules each including a light emitting element in a grid pattern on the chassis, support pins being dotted on the chassis for supporting the diffusion plate on the chassis, each of the support pins being disposed on a line segment connecting a pair of adjacent ones among the light emitting modules.

According to this configuration, a shadow cast by the support pin on the diffusion plate is a combined form of shadows cast under irradiation light from the light emitting modules on both sides of the support pin and is elongated in shape and reduced in area, so that unevenness in luminance of the diffusion plate becomes less noticeable.

According to a preferred embodiment of the present invention, each of the light emitting modules includes a diffusion lens that covers the light emitting element.

The diffusion lens is disposed for the purpose of increasing a light component of emission light from the light emitting element that travels toward a lateral direction. Although the presence of the diffusion lens tends to highlight a shadow of the support pin, in any case, according to the configuration of the present invention, a shadow elongated in shape and reduced in area is cast, so that unevenness in luminance of the diffusion plate becomes less noticeable.

According to a preferred embodiment of the present invention, the support pin is disposed at a position at an equal distance from each of a pair of adjacent ones among the light emitting modules on both sides of the support pin.

According to this configuration, in no case is a darker shadow cast only on one of both sides of the support pin, and shadows of the same darkness level are cast on both sides, so that a resulting shadow is less noticeable.

According to a preferred embodiment of the present invention, the support pins are supported on a mounting substrate on which the light emitting element is supported.

According to this configuration, a positional relationship between each of the light emitting modules and the support pin can be set accurately, and the set positional relationship can be maintained constant. Even in a case where, due to a model change, the mounting substrate is to be mounted to a dimensionally different type of chassis, the same positional relationship between each of the light emitting modules and the support pin can be applied as it is to the different type of chassis, and thus there is no need to bother about disposing the support pin.

According to a preferred embodiment of the present invention, the support pin has a high light reflectance at least at a part of a surface thereof irradiated with irradiation light from the light emitting modules.

According to this configuration, it is unlikely that irradiation light from the light emitting modules is absorbed by the support pin, and thus light emitting by the light emitting modules can be utilized sufficiently for illumination of the diffusion plate.

According to a preferred embodiment of the present invention, the support pin is molded from a resin material into which a high light-reflectance substance is mixed.

According to this configuration, a support pin having a high light-reflectance surface can be easily obtained.

According to a preferred embodiment of the present invention, the light emitting element is an LED.

According to this configuration, through the use of an LED, which has recently been remarkably improved in luminance, an illumination device that provides high brightness can be obtained.

According to a preferred embodiment of the present invention, a display device comprises: the illumination device having any of the above-described configurations; and a display panel that receives light from the illumination device.

According to this configuration, in a display device, unevenness in luminance attributable to the support pin is less noticeable.

According to a preferred embodiment of the present invention, the display panel is a liquid crystal display panel.

According to this configuration, in a liquid crystal display device, unevenness in luminance attributable to the support pin is less noticeable.

According to a preferred embodiment of the present invention, a television receiver is formed that includes the display device having the above-described configuration.

According to this configuration, on a screen of a television receiver, unevenness in luminance attributable to the support pin is less noticeable.

### Advantageous Effects of the Invention

According to the present invention, a shadow cast by a support pin on a diffusion plate under emission light from a light emitting module including a light emitting element is elongated in shape and reduced in area, so that unevenness in luminance of the diffusion plate becomes less noticeable.

### Brief Description of Drawings

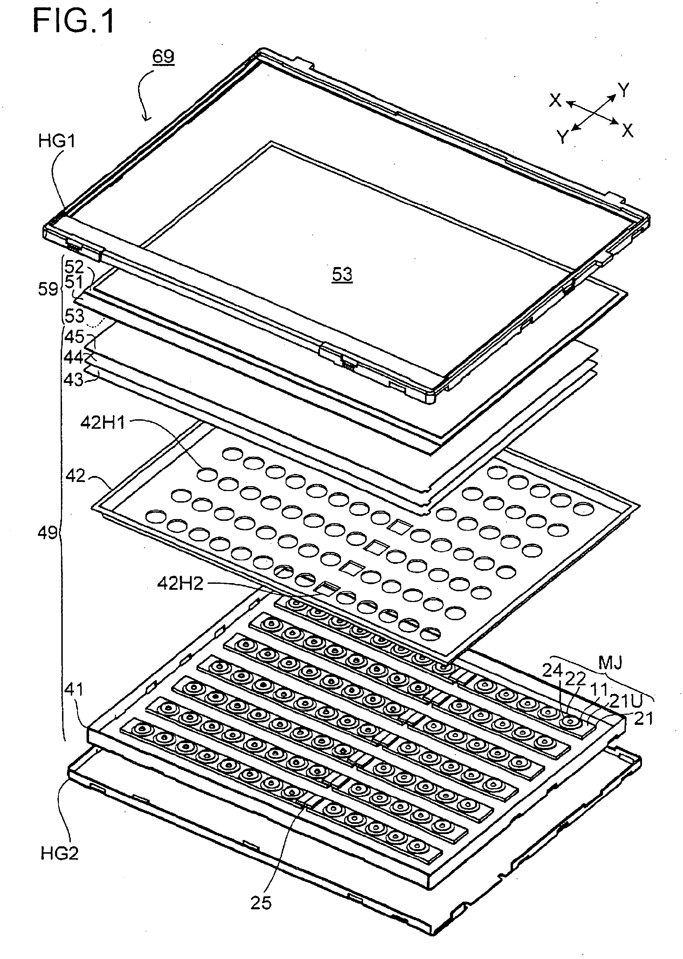

[Fig. 1] is an exploded perspective view of a display device including an illumination device according to a preferred embodiment of the present invention.

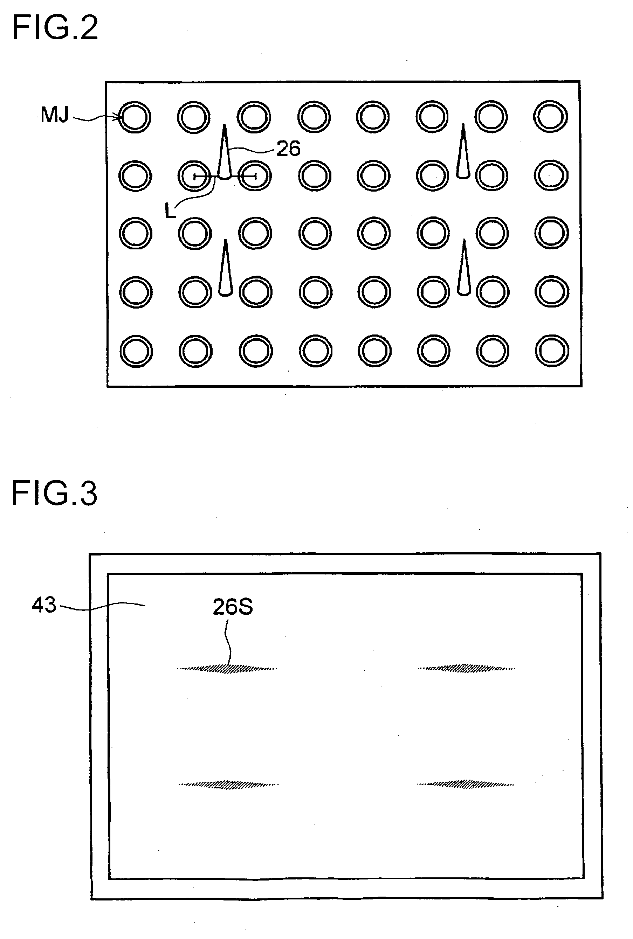

[Fig. 2] is an explanatory view illustrating a disposition of a support pin in the illumination device according to the preferred embodiment of the present invention.
[Fig. 3] is a conceptual view showing a shape of a shadow cast on a diffusion plate in a case where the disposition of a support pin shown in Fig. 2 is adopted.

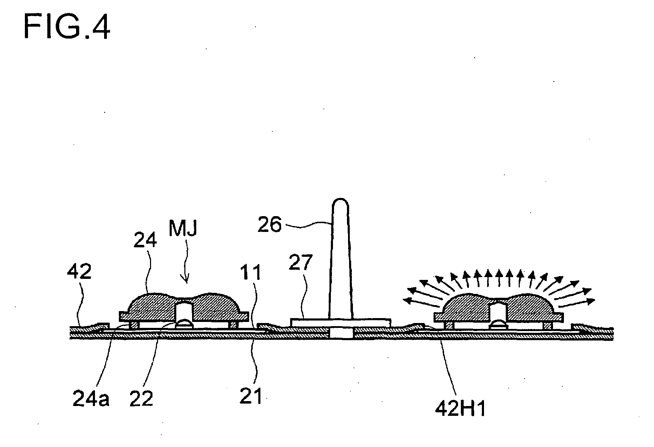

[Fig. 4] is a cross-sectional view of a mounting substrate that shows a mounted state of the support pin.

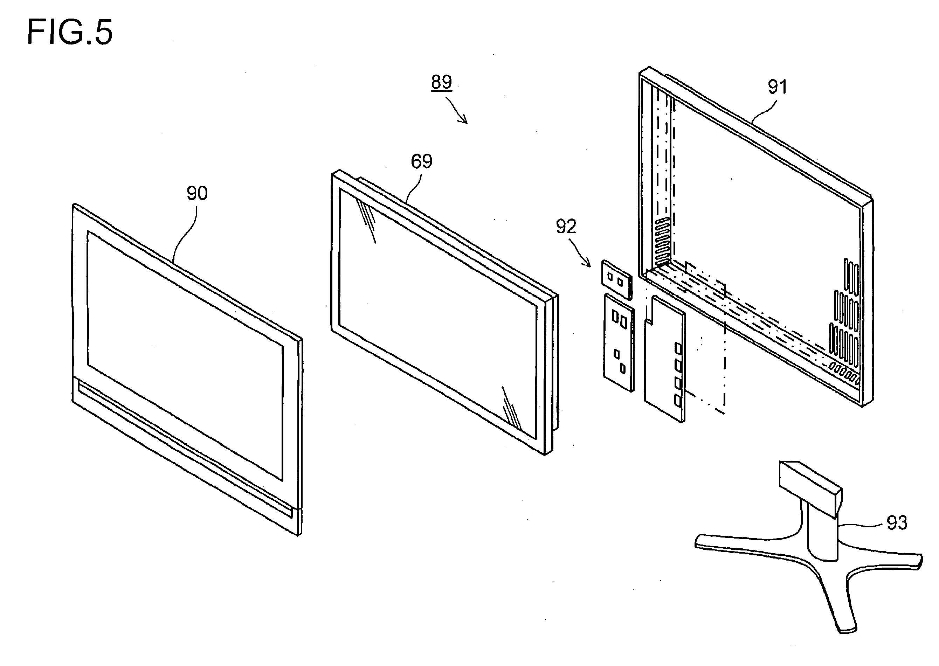

[Fig. 5] is an exploded perspective view of a television receiver.
[Fig. 6] is a first explanatory view illustrating a disposition of a support pin.
[Fig. 7] is a conceptual view showing a shape of a shadow cast on a diffusion plate in a case where the disposition of a support pin shown in Fig. 6 is adopted.

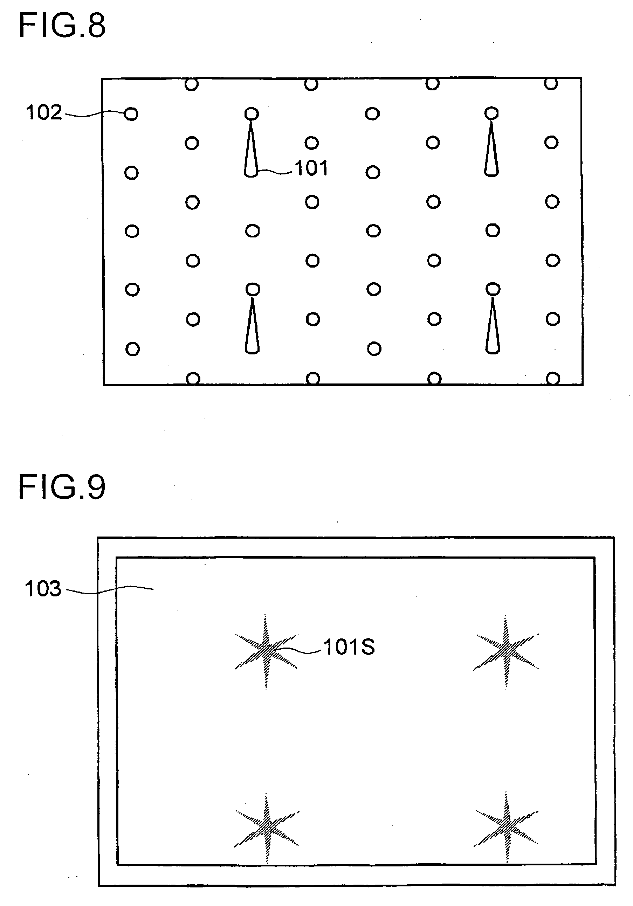

[Fig. 8] is a second explanatory view illustrating a disposition of the support pin.
[Fig. 9] is a conceptual view showing a shape of a shadow cast on the diffusion plate in a case where the disposition of the support pin shown in Fig. 8 is adopted.

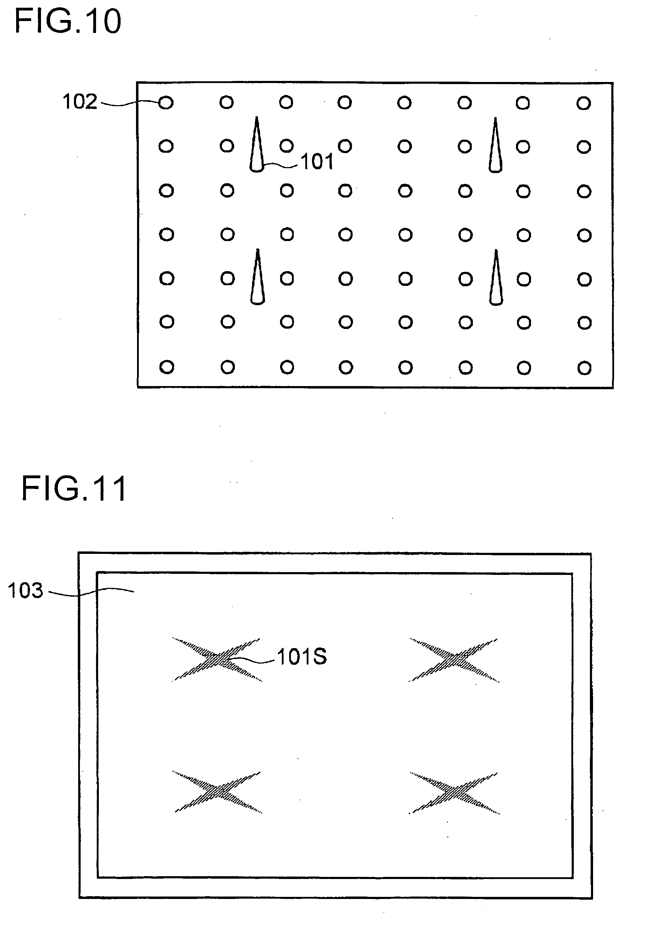

[Fig. 10] is a third explanatory view illustrating a disposition of the support pin.
[Fig. 11] is a conceptual view showing a shape of a shadow cast on the diffusion plate in a case where the disposition of the support pin shown in Fig. 10 is adopted.
[Fig. 12] is an exploded perspective view of a conventional illumination device.

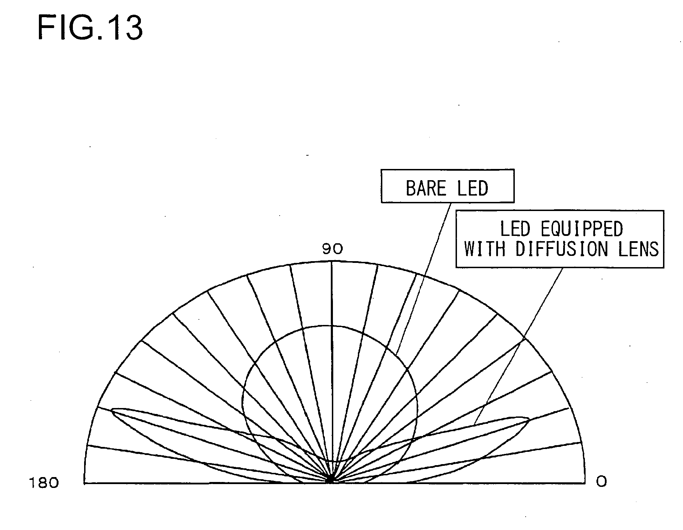

[Fig. 13] is a graph showing how illuminance varies depending on an irradiation direction of an LED.

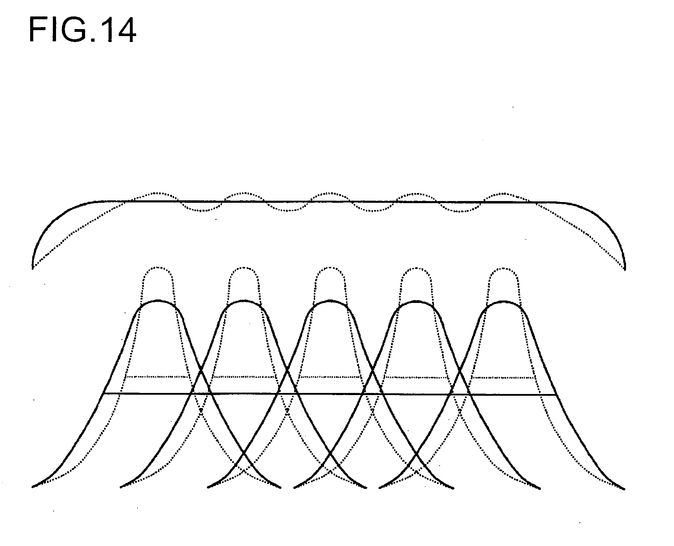

[Fig. 14] is a conceptual view showing a collective luminance of a plurality of LEDs.

### Description of Embodiments

Based on Figs. 1 to 3, the following describes a structure of an embodiment of a display device including an illumination device according to a preferred embodiment of the present invention. In Fig. 1, a display device 69 is depicted in a state of being placed horizontally with its display surface facing upward.

The display device 69 incorporates a liquid crystal display panel 59 as a display panel. The liquid crystal display panel 59 and a backlight unit 49 that irradiates the liquid crystal display panel 59 from behind are housed in a housing. The housing is formed by joining a front housing member HG1 and a rear housing member HG2 together.

The liquid crystal display panel 59 is formed by fixing an active matrix substrate 51 including a switching element such as a thin film transistor (TFT) or the like to an opposed substrate 52 opposed to the active matrix substrate 51 by an unshown sealing material and by filling a space between the active matrix substrate 51 and the opposed substrate 52 with liquid crystal.

A polarization film 53 is attached to each of a light receiving surface side of the active matrix substrate 51 and an emission side of the opposed substrate 52. The liquid crystal display panel 59 forms images by utilizing variations in light transmittance due to a tilt of liquid crystal molecules.

The backlight unit 49 embodying the illumination device according to the present invention has the following configuration. That is, the backlight unit 49 includes a light emitting module MJ, a chassis 41, a large-sized reflection sheet 42, a diffusion plate 43, a prism sheet 44, and a microlens sheet 45.

The light emitting module MJ includes a mounting substrate 21, an LED 22 as a light emitting element, a diffusion lens 24, and an embedded reflection sheet 11.

The backlight unit 49 of the display device 69 having the liquid crystal display panel 59 includes the chassis 41, the diffusion plate 43 supported by the chassis 41, and a light source that irradiates the diffusion plate 43 with light. The light source is formed by disposing a plurality of the light emitting modules MJ each including the LED 22 as a light emitting element and the diffusion lens 24 that covers the LED 22 in a grid pattern on the chassis 41 supporting the diffusion plate 43. On the chassis 41, support pins 26 for supporting the diffusion plate 43 are dotted. Each of the support pins 26 is disposed on a line segment connecting a pair of adjacent ones among the light emitting modules MJ.

As described earlier, LEDs of recent years have been improved in luminance and thus made it possible to obtain an amount of light required to illuminate the entire surface of a screen by using a relatively smaller number of LEDs. Sparsely disposing high-luminance LEDs, however, inevitably causes unevenness in luminance, and it is, therefore, preferable to use each individual LED in combination with a lens having a high light diffusion capability (in this specification, such a lens is referred to as a "diffusion lens").

Fig. 13 is a graph showing how illuminance (unit: lux) varies depending on an irradiation direction of each of a bare LED and an LED equipped with a diffusion lens. In a case of the bare LED, the illuminance thereof reaches its peak at an angle of 90°, which is an optical axis angle thereof, and decreases sharply with increasing deviation of an angle from 90°. On the other hand, in a case of the LED equipped with the diffusion lens, an illuminance value equal to or greater than a given value can be secured at a wider range of angles, and the illuminance thereof can be set to reach its peak at an angle different from the optical axis angle. Needless to say, an illumination pattern shown in the figure may vary in various ways depending on how the diffusion lens is designed.

Fig. 14 shows a conceptual view of a collective luminance of a plurality of LEDs. In the figure, a waveform shown by a solid line indicates a luminance of an LED equipped with a diffusion lens, and a waveform shown by a dotted line indicates a luminance of a bare LED. A horizontal line drawn in a waveform indicates a width of the waveform at a luminance value half its peak value (full width at half maximum). In a case of the LEDs each equipped with the diffusion lens, each individual waveform having an increased width can be obtained, and thus a waveform of respective luminances in the collective form as a total luminance can be easily made flat as shown by the solid line on the upper side in the figure. On the other hand, in a case of the bare LEDs, each individual waveform obtained is large in height and small in width, so that a waveform of respective luminances in the collective form inevitably becomes uneven. An image having such unevenness in luminance is undesirable, and it is, therefore, substantially essential that an LED equipped with a diffusion lens be adopted.

In view of the above, the light emitting module MJ is configured to include the diffusion lens 24.

The mounting substrate 21 has an elongated rectangular shape, and on a mounting surface 21U that is an upper surface of the mounting substrate 21, a plurality of electrodes (not shown) are formed at a predetermined spacing from each other in a longitudinal direction, on each of which the LED 22 is mounted. As the LED 22, an LED of a type that provides white light by the combined use of three LED chips that emit light of different colors can be used. The mounting substrate 21 is used as a common substrate shared by a plurality of LEDs among the LEDs 22. That is, with respect to the combination of the LED 22, the diffusion lens 24, and the embedded reflection sheet 11 as one set, a plurality of sets of these are disposed at a predetermined spacing from each other along the longitudinal direction of the mounting substrate 21 as shown in Fig. 1.

The diffusion lens 24 has a circular shape in plan view and is provided with a plurality of leg portions 24a at a lower surface thereof. The leg portions 24a are bonded at their tip ends to the mounting surface 21U of the mounting substrate 21 by use of an adhesive, and thus the diffusion lens 24 is mounted to the mounting substrate 21. The presence of the leg portions 24a provides a gap between the mounting substrate 21 and the diffusion lens 24. An airflow flowing through this gap cools the LED 22. Provided that the problem of heat radiation can be solved, it is also possible to use a light emitting module of an integrally molded type obtained by embedding an LED in a diffusion lens.

As the LED 22, various types of LEDs can be used. For example, there can be used an LED of a type that uses an LED chip that emits blue light in combination with a phosphor that emits a yellow fluorescent light upon receiving the light from the LED chip and generates white light by the combined use of the blue light and the yellow light emitted by them. Also, there can be used an LED of a type that uses an LED chip that emits blue light in combination with phosphors that emit green fluorescent light and red fluorescent light, respectively, upon receiving the light from the LED chip and generates white light by the combined use of the blue light, the green light, and the red light emitted by them.

Also, there can be used an LED of a type that uses in combination an LED chip that emits red light, an LED chip that emits blue light, and a phosphor that emits green fluorescent light based on the blue light from the blue light emitting LED chip and generates white light by the combined use of the red light, the blue light, and the green light emitted by them.

Also, there can be used an LED of a type that uses in combination an LED chip that emits red light, an LED chip that emits green light, and an LED chip that emits blue light and generates white light by the combined use of the red light, the green light, and the blue light emitted by them.

In Fig. 1, the mounting substrate 21 of such a type that five LEDs 22 are arranged per one sheet of the substrate and the mounting substrate 21 of such a type that eight LEDs 22 are arranged per one sheet of the substrate are used in combination. The mounting substrate 21 of the type having five LEDs 22 and the mounting substrate 21 of the type having eight LEDs 22 are coupled to each other through engagement of a pair of connectors 25 (needless to say, a male connector and a female connector are intended herein), each connector 25 is mounted on a far-end edge of the mounting substrate 21.

With respect to the combination of the mounting substrate 21 of the type having five LEDs 22 and the mounting substrate 21 of the type having eight LEDs 22 as one set, a plurality of sets of these are arranged in parallel with each other on the chassis 41. On the mounting substrate 21, the LEDs 22 are arranged in the direction of a long side of the chassis 41, namely, in a direction indicated by an arrow X in Fig. 1, and two sheets of the combination of these types of mounting substrates 21 are arranged in the direction of a short side of the chassis 41, namely, in a direction indicated by an arrow Y in Fig. 1. The LEDs 22 are, therefore, arranged in a matrix form. The mounting substrate 21 is fixed to the chassis 41 appropriately by, for example, being swaged, bonded, screwed, or riveted thereto.

The embedded reflection sheet 11 is disposed between the mounting substrate 21 and the diffusion lens 24. The embedded reflection sheet 11 is fixed at a position on the mounting surface 21U at which the mounting surface 21U faces the lower surface of the diffusion lens 21. The embedded reflection sheet 11 has a light reflectance higher than that of the mounting substrate 21. The embedded reflection sheet 11 also has a circular shape in plan view and is concentric with the diffusion lens 24. The diameter of the embedded reflection sheet 11 is larger than that of the diffusion lens 24. A through hole for passing therethrough each of the leg portions 24a of the diffusion lens 24 is formed through the embedded reflection sheet 11.

The reflection sheet 42 having a similar shape in plan view to the chassis 41 is laid on the chassis 41. As the reflection sheet 42, a foamed resin sheet of a type similar to that used for the embedded reflection sheet 11 is used. A circular pass-through opening 42H1 having a size sufficient to pass the diffusion lens 24 therethrough but insufficient to pass the embedded reflection sheet 11 therethrough is formed through the reflection sheet 24 so as to correspond to the position of each of the light emitting modules MJ. Furthermore, a rectangular pass-through opening 42H2 for the pair of connectors 25 to protrude therefrom is also formed through the reflection sheet 42 so as to correspond to the position of each of the pairs of connectors 25.

On the chassis 41, the support pins 26 for supporting the diffusion plate 43 are dotted. The support pins 26 are not shown in Fig. 1. In the present invention, each of the support pins 26 is set to be disposed at a position not in the center of an area defining a single mesh of the grid pattern formed by the light emitting modules MJ but on a line segment connecting a pair of adjacent ones among the light emitting modules MJ. Fig. 2 shows a line segment L. Needless to say, the line segment L is conceptual, not substance. On the line segment L, the support pin 26 is disposed at a position at an equal distance from each of a pair of adjacent ones among the light emitting modules MJ on both sides of the support pin 26.

With the support pin 26 disposed in this manner, only two light emitting modules MJ sandwiching the support pin 26 from both sides get involved in the formation of a shadow of the support pin 26. As shown in Fig. 3, a shadow 26S cast by the support pin 26 on the diffusion plate 43 is a combined form of shadows cast under irradiation light from the light emitting modules MJ on both sides and is elongated in shape and reduced in area, so that unevenness in luminance of the diffusion plate 43 becomes less noticeable. Furthermore, since the support pin 26 is disposed at a position at an equal distance from each of the light emitting modules MJ on both sides, in no case is a darker shadow cast only on one of both sides of the support pin 26, and shadows of the same darkness level are cast on both sides, so that a resulting shadow is even less noticeable.

The mounting substrate 21 may be configured to support the support pin 26. Fig. 4 shows an example of such a structure. The support pin 26 shown in Fig. 4 has a flange 27 at its base, and a part of the support pin 26 protruding below the flange 27 is inserted into a through hole formed through the mounting substrate 21 via a through hole formed through the reflection sheet 42. Although once the support pin 26 is brought to a state of supporting the diffusion plate 43, the support pin 26 is prevented from being released from the mounting substrate 21, the support pin 26 may also be securely fixed beforehand to the mounting substrate 21 by use of an adhesive or the like.

Since the mounting substrate 21 is configured to support the support pin 26, a positional relationship between the light emitting module MJ and the support pin 26 can be set accurately, and the set positional relationship can be maintained constant. Even in a case where, due to a model change, the mounting substrate 21 is to be mounted to a dimensionally different type of chassis 41, the same positional relationship between the light emitting module MJ and the support pin 26 can be applied as it is to the different type of chassis 41, and thus there is no need to bother about disposing the support pin 26.

It is desirable that the support pin 26 have a high light reflectance at least at a part of a surface thereof irradiated with irradiation light from the light emitting module MJ. This makes it unlikely that irradiation light from the light emitting module MJ is absorbed by the support pin 26, thereby allowing light emitted by the light emitting module MJ to be utilized sufficiently for illumination of the diffusion plate 43.

The light reflectance of the surface of the support pin 26 can be further increased when a bright color, particularly a white color, is used as a color of the surface of the support pin 26. Molding the support pin 26 from a resin material such as polycarbonate or the like into which a high light-reflectance substance such as titanium oxide, barium sulfate, or the like is mixed easily allows the support pin 26 to have a high light-reflectance surface.

Fig. 5 shows an example of a configuration of a television receiver into which the display device 69 is incorporated. A television receiver 89 has a configuration in which, in a cabinet formed by joining a front cabinet part 90 and a rear cabinet part 91 together, the display device 69 and a control board group 92 are housed, and the cabinet is supported by a stand 93.

The foregoing has discussed the preferred embodiment of the present invention. The present invention, however, is not limited to the scope described therein and may be embodied in variously modified forms without departing from the spirit of the invention.

### Industrial Applicability

The present invention can be broadly applied to an illumination device in which a plurality of light emitting modules each including a light emitting element are disposed in a grid pattern and used as a light source, and a diffusion plate is irradiated with light from this light source. Furthermore, the present invention can be broadly applied also to a display device including the illumination device and further to a television receiver including the display device.

### List of Reference Symbols

- 49: backlight unit
- 41: chassis
- 43: diffusion plate
- MJ: light emitting module
- 11: embedded reflection sheet
- 21: mounting substrate
- 22: LED
- 24: diffusion lens
- 26: support pin
- 59: liquid crystal display panel
- 69: display device
- 89: television receiver

## Claims

1. An illumination device, comprising:
a chassis;
a diffusion plate supported on the chassis;
a light source irradiating the diffusion plate with light, the light source being formed by disposing a plurality of light emitting modules each including a light emitting element in a grid pattern on the chassis; and
support pins being dotted on the chassis for supporting the diffusion plate on the chassis, each of the support pins being disposed on a line segment connecting a pair of adjacent ones among the light emitting modules.

2. The illumination device according to claim 1, wherein
each of the light emitting modules includes a diffusion lens that covers the light emitting element.

3. The illumination device according to claim 1, wherein
the support pin is disposed at a position at an equal distance from each of a pair of adjacent ones among the light emitting modules on both sides of the support pin.

4. The illumination device according to claim 1, wherein
the support pins are supported on a mounting substrate on which the light emitting element is supported .

5. The illumination device according to claim 1, wherein
the support pin has a high light reflectance at least at a part of a surface thereof irradiated with irradiation light from the light emitting modules.

6. The illumination device according to claim 5, wherein
the support pin is molded from a resin material into which a high light-reflectance substance is mixed.

7. The illumination device according to claim 1, wherein
the light emitting element is an LED.

8. A display device, comprising:
the illumination device according to any one of claims 1 to 7; and
a display panel that receives light from the illumination device.

9. The display device according to claim 8, wherein
the display panel is a liquid crystal display panel.

10. A television receiver comprising the display device according to claim 8.
